(19)

**Europäisches Patentamt**

**European Patent Office**

**Office européen des brevets**

(11)  **EP 2 865 903 A1**

(12)  **EUROPÄISCHE PATENTANMELDUNG**

(43) Veröffentlichungstag:
**29.04.2015  Patentblatt 2015/18**

(21) Anmeldenummer: **13189656.5**

(22) Anmeldetag: **22.10.2013**

(51) Int Cl.:
*F16B 13/06* *(2006.01)*     *F16B 43/00* *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **HILTI Aktiengesellschaft**
**9494 Schaan (LI)**

(72) Erfinder:
 • **Gstach, Peter**
  **9494 Schaan (LI)**

 • **Winkler, Bernhard**
  **6800 Feldkirch (AT)**
 • **Scholz, Patrick**
  **9470 Buchs (CH)**

(74) Vertreter: **Hilti Aktiengesellschaft**
**Corporate Intellectual Property**
**Feldkircherstrasse 100**
**Postfach 333**
**9494 Schaan (LI)**

(54)  **Spreizanker mit Federelement**

(57)    Die Erfindung betrifft einen Spreizanker (1) zum Verankern in einem Bohrloch (99) in einem Substrat (5), mit einem Bolzen (10) mit einem vorderen Ende (51) und einem dem vorderen Ende entgegengesetzten hinteren Ende (52), einer am Bolzen angeordneten Spreizhülse (20), einem Spreizkonus (12), welcher im Bereich des vorderen Endes des Bolzens angeordnet ist, und welcher die Spreizhülse radial nach aussen drängt, wenn der Spreizkonus in einer Auszugrichtung relativ zur Spreizhülse versetzt wird, einem Widerlager (8) zum axialen Anpressen eines Anbauteils (6) an das Substrat, welches im Bereich des hinteren Endes des Bolzens angeordnet ist, und einem am Bolzen angeordneten Federelement (7) zum axialen Vorspannen des Widerlagers gegen das Anbauteil. Erfindungsgemäss ist vorgesehen, dass die axiale Federkraft F des Federelements im Bereich $F_{min} < F < F_{max}$ mit

$$F_{min} = d_{max} \cdot 0.2 \text{ kN/mm} - 0.8 \text{ kN}$$

$$F_{max} = d_{max} \cdot 0.6 \text{ kN/mm}$$

liegt, wenn das Federelement axial 0.4 mm bis 0.8 mm aus seinem maximalen Federweg heraus entspannt ist, wobei $d_{max}$ ein maximaler Durchmesser des Bolzens zwischen dem Spreizkonus und dem Widerlager ist.

**EP 2 865 903 A1**

**(Forts. nächste Seite)**

Fig. 1

$d_{max}$

**Beschreibung**

Die Erfindung betrifft einen Spreizanker zum Verankern in einem Bohrloch in einem Substrat gemäss dem Oberbegriff des Anspruchs 1. Ein solcher Spreizanker ist ausgestattet mit einem Bolzen mit einem vorderen Ende und einem dem vorderen Ende entgegengesetzten hinteren Ende, einer am Bolzen angeordneten Spreizhülse, einem Spreizkonus, welcher im Bereich des vorderen Endes des Bolzens angeordnet ist, und welcher die Spreizhülse radial nach aussen drängt, wenn der Spreizkonus, insbesondere zusammen mit dem Bolzen, in einer Auszugrichtung relativ zur Spreizhülse versetzt wird, einem Widerlager zum axialen Anpressen eines Anbauteils an das Substrat, welches im Bereich des hinteren Endes des Bolzens am Bolzen angeordnet ist, und einem am Bolzen, insbesondere im Bereich des hinteren Endes des Bolzens, angeordneten Federelement zum axialen Vorspannen des Widerlagers und vorzugsweise auch des Bolzens gegen das Anbauteil.

Ein Spreizanker mit Federelement ist beispielsweise aus der DE 33 31 097 A1 bekannt. Er weist zwischen seinem als Schraubenkopf ausgebildeten Widerlager und dem Substrat, in welchem der Anker gesetzt ist, ein Federelement auf. Dieses Federelement kann die Vorspannung im Bolzen des Spreizankers teilweise aufrechterhalten, wenn das Substrat im Verlauf einiger Stunden und Tage nach dem Setzen des Ankers relaxiert.

Weitere Spreizanker mit Federelementen sind aus der DE 30 22 011 A1 bekannt. Diese Schrift lehrt, das Federelement so zu dimensionieren, dass es bei Erreichen der vorgeschriebenen Setzkraft des Ankers oder eines vorgegebenen Bruchteils hiervon vollständig eingefedert ist, das heisst in seinem Verformungsweg erschöpft ist. Das Federelement kann damit als visueller Setzkraftanzeiger dienen.

Aufgabe der Erfindung ist es, einen besonders zuverlässigen Spreizanker mit besonders guten Lastwerten, insbesondere in gerissenem Beton, anzugeben, der zugleich besonders einfach und kostengünstig konzeptioniert ist.

Die Aufgabe wird erfindungsgemäss durch einen Spreizanker mit den Merkmalen des Anspruchs 1 gelöst. Bevorzugte Ausführungsformen sind in den abhängigen Ansprüchen angegeben.

Ein erfindungsgemässer Spreizanker ist dadurch gekennzeichnet, dass die axiale Federkraft $F$ des Federelements im Bereich $F_{min} < F < F_{max}$ mit

$$F_{min} = d_{max} \cdot 0.2 \text{ kN/mm} - 0.8 \text{ kN}$$

$$F_{max} = d_{max} \cdot 0.6 \text{ kN/mm}$$

liegt, wenn das Federelement axial 0.4 mm bis 0.8 mm aus seinem maximalen Federweg heraus entspannt ist, wenn also für den Federweg $s$ des Federelements gilt:

$$(s_{max} - 0.8 \text{ mm}) < s < (s_{max} - 0.4 \text{ mm}),$$

wobei $d_{max}$ ein maximaler Durchmesser des Bolzens zwischen dem Spreizkonus und dem Widerlager und $s_{max}$ der maximale Federweg ist. Die Einheitsbezeichnung "kN" soll dabei in üblicher Weise für die Einheit Kilonewton und die Einheitsbezeichnung "mm" für Millimeter stehen.

Die Erfindung basiert auf Experimenten, die mit Spreizankern in gerissenem Beton durchgeführt wurden. Öffnet sich ein Betonriss, in welchem sich der Spreizanker befindet, auf eine für ein Bauwerk typische Weite von beispielsweise 0.3 mm bis 0.5 mm, so fällt die Vorspannkraft im Bolzen ab, da sich der Spreizkonus und somit der Bolzen typischerweise um 0.4 mm bis 0.8 mm in Auszugrichtung bewegt, und sich das gegebenenfalls vorhandene Federelement um eine entsprechende Wegstrecke entspannt. Dieser Abfall der Vorspannkraft kann zu einer reduzierten Verankerung führen und kann somit negative Folgen für die Lasteigenschaften des Ankers haben und insbesondere zu einer unerwünschten Verschiebung des Ankers führen, wenn sich der Riss wiederholt öffnet und wieder schliesst. Denn mit abnehmender Vorspannkraft, im Extremfall auf 0 kN, nimmt die Aufspreizwirkung ab, und die Spreizlappen der Spreizhülse können sich im Extremfall von der Bohrlochwand lösen.

Hierauf aufbauend schlägt die Erfindung ein Federelement mit einer speziellen Federkennlinie im Kraft-Weg-Diagramm vor. Bei dieser speziellen Federkennlinie liegt die verbleibende Rest-Federkraft $F$ in einem vorgegebenen Bereich zwischen $F_{min}$ und $F_{max}$, wenn das Federelement beim Setzen des Ankers zunächst seinen maximalen Federweg $s_{max}$ erreicht hatte, und sich das Federelement, insbesondere bei Rissöffnung, anschliessend um den für gerissenen Beton typischen Weg von 0.4 mm bis 0.8 mm entspannt hat.

Die Erfindung hat erkannt, dass mit einem erfindungsgemäss dimensionierten Federelement zum einen hinreichend hohe Restvorspannungen bei typischen Bedingungen in gerissenem Beton aufrecht erhalten werden können, so dass der oben beschriebene negative Effekt einer Rissöffnung weitestgehend vermieden werden kann. Insbesondere wurde experimentell beobachtet, dass mit einem solchen Federelement bestehende federfreie Ankersysteme in gerissenem Beton um ca. eine Lastklasse verbessert werden können und/oder eine Laststeigerung von ca. 25% erzielt werden kann. Zum anderen hat die Erfindung erkannt, dass das Federelement bei den vorgesehenen Parametern in der Regel noch als einlagige Tellerfeder ausgeführt werden kann, so dass der Herstellungsaufwand und die Herstellungskosten für das Federelement und somit für den gesamten Anker besonders gering sein können. Insbesondere werden in der Regel keine aufwändigen Federpakete entsprechend DE 33 31 097 A1 benötigt, und es können trotzdem sehr gute Lastwerte in gerissenem Beton erhalten werden. Auch können erfindungsgemäss bei relativ grossen Rissen, wie sie beispielsweise in Seismik-Situationen auftreten können, ausreichende Restvorspannungen erzielt werden.

Wenn das Federelement seinen maximalen Federweg eingenommen hat, das heisst wenn für den Federweg s somit $s = s_{max}$ gilt, ist das Federelement auf Block eingefedert und/oder sein Verformungsweg ist erschöpft. Insbesondere kann die Federkennlinie am maximalen Federweg $s_{max}$ sehr steil nach oben abknicken. Eine Entspannung von 0.4 bis 0.8 mm aus dem maximalen Federweg heraus kann insbesondere beinhalten, dass das Federelement um diese Weglänge vom maximalen Federweg hinweg ausgefedert ist, dass für den Federweg s also gilt:

$$(s_{max} - 0.8\ mm) < s < (s_{max} - 0.4\ mm).$$

Grundsätzlich kann es ausreichen, wenn die axiale Federkraft F des Federelements an zumindest einer einzigen Position im Bereich 0.4 mm bis 0.8 mm aus dem maximalen Federweg heraus im Bereich $F_{min} < F < F_{max}$ liegt, wenn also $F_{min} < F < F_{max}$ für zumindest einen Federweg s im Bereich $(s_{max} - 0.8\ mm) < s < (s_{max} - 0.4\ mm)$ gilt. In diesem Fall definiert die Erfindung eine Linie im Kraft-Weg Diagramm, welche von der Federkennlinie des Federelements geschnitten wird. Besonders bevorzugt ist es aber, wenn die axiale Federkraft F des Federelements im gesamten Bereich 0.4 mm bis 0.8 mm aus dem maximalen Federweg heraus, also für jeden Federweg s im Bereich $(s_{max} - 0.8\ mm) < s < (s_{max} - 0.4\ mm)$, im Bereich $F_{min} < F < F_{max}$ liegt. Die Erfindung definiert dann ein Rechteck im Kraft-Weg Diagramm, in welchem die Federkennlinie des Federelements liegen muss. Hierdurch kann ein im gerissenen Beton besonders zuverlässiger Anker erhalten werden.

Beim erfindungsgemässen Federelement handelt es sich insbesondere um eine Druckfeder, also eine Feder, die bei axialer Kompression eine axiale Federkraft erzeugt. Soweit in dieser Beschreibung von "radial", "axial" und "Umfangsrichtung" die Rede ist, kann sich dies insbesondere auf die Längsachse des Bolzens beziehen, die insbesondere die Symmetrie- und/oder Mittelachse des Bolzens sein kann. Der Durchmesser des Bolzens, insbesondere der maximale Durchmesser $d_{max}$ des Bolzens, wird vorzugsweise senkrecht zur Längsachse des Bolzens gemessen. Der maximale Durchmesser $d_{max}$ des Bolzens entspricht vorzugsweise etwa dem Nenndurchmesser des Spreizankers, also insbesondere dem Durchmesser des Bohrlochs, für das der Spreizanker vorgesehen ist.

Der Spreizanker kann bevorzugt ein kraftkontrolliert spreizender Spreizanker sein. Die Spreizhülse ist erfindungsgemäss längs des Bolzens verschiebbar am Bolzen angeordnet, insbesondere befestigt. Die Spreizhülse und/oder der Bolzen bestehen geeigneterweise aus einem Metallmaterial, welches, beispielsweise zur gezielten Beeinflussung der Reibung, auch beschichtet sein kann.

Erfindungsgemäss wird die Spreizhülse von einer schrägen Oberfläche des Spreizkonus radial nach aussen gedrängt und dabei gegen die Bohrlochwand im Substrat gepresst, wenn der Spreizkonus relativ zur Spreizhülse in Auszugrichtung des Bolzens axial versetzt wird. Hierdurch wird der Spreizanker im Bohrloch verankert. Vorzugsweise verläuft die Auszugsrichtung parallel zur Längsachse des Bolzens und/oder zeigt aus dem Bohrloch heraus. Zweckmässigerweise nimmt der Abstand der Oberfläche des Spreizkonus von der Längsachse des Bolzens entgegen der Auszugrichtung, das heisst mit zunehmendem Abstand vom hinteren Ende des Bolzens, zu. Die Oberfläche des Spreizkonus kann streng konisch sein, sie muss dies aber nicht.

Das Widerlager bildet zweckmässigerweise einen Absatz, insbesondere eine Ringstufe, an dem beziehungsweise an der das Widerlager formschlüssig gegen das Anbauteil wirken kann. Insbesondere können am Widerlager Zugkräften, die in Auszugrichtung gerichtet sind, in den Bolzen eingeleitet werden. Das Widerlager kann einen Aussenmehrkant, beispielsweise einen Aussensechskant, zum Werkzeugansatz aufweisen. Insbesondere wenn der Spreizanker als sogenannter Hülsenanker ausgebildet ist, kann das Widerlager axial fest und drehfest am Bolzen vorgesehen sein und insbesondere einstückig mit diesem ausgebildet sein. Insbesondere wenn der Spreizanker hingegen als sogenannter Bolzenanker ausgebildet ist, kann es sich beim Widerlager auch um ein vom Bolzen ein separates Teil handeln, welches, beispielsweise durch Drehung, axial relativ zum Bolzen versetzt werden kann. Das Widerlager besteht vorzugsweise aus einem Metallmaterial.

Erfindungsgemäss wirkt das Widerlager bei gesetztem Anker axial gegen das Federelement, so dass das Federelement zwischen Widerlager und Anbauteil eingespannt wird. Das Federelement liegt vorzugsweise einerseits am Widerlager und andererseits am Anbauteil an, jeweils zumindest mittelbar. Insbesondere kann das Federelement den Bolzen umlaufen. Das Federelement besteht vorzugsweise aus einem Metallmaterial. Insbesondere kann die Rest-Federkraft F nach axialer Entspannung von 0.4 mm bis 0.8 mm aus dem maximalen Federweg heraus im Bereich zwischen 2.5 kN und 7 KN liegen.

Wie bereits weiter oben erwähnt kann es besonders vorteilhaft sein, dass das Federelement eine einlagige Tellerfeder ist. Insbesondere kann nach der Erfindung genau ein Federelement zum axialen Vorspannen des Widerlagers gegen das Anbauteil vorgesehen sein, welches als einlagige Tellerfeder ausgebildet ist. Die Tellerfeder kann den Bolzen vorzugsweise ringartig umgeben. Die Tellerfeder kann so konfiguriert sein, dass sie bei Erreichen des maximalen Federweges flach ist. Sie kann aber auch ein oder mehrere Stützelemente aufweisen, so dass sie auf Block, das heisst bei Erreichen des maximalen Federweges, nicht völlig flach ist.

Es kann vorgesehen sein, dass der Spreizanker eine Unterlegscheibe aufweist, die den Bolzen umgibt, und/oder die vorzugsweise zwischen dem Federelement und dem Widerlager angeordnet ist. Vorzugsweise ist also die Unterlegscheibe auf der dem hinteren Ende des Bolzens zugewandten Seite des Federelements vorgesehen. Eine solche Unterlegscheibe kann die Zuverlässigkeit des Systems noch weiter erhöhen, insbesondere indem sie für eine besonders genaue Federkennlinie sorgt, beispielsweise indem sie Torsionskräfte am Widerlager vom Federelement entkoppelt. Alternativ oder zusätzlich kann eine Unterlegscheibe zwischen dem Anbauteil und dem Federelement vorgesehen werden, also auf der dem vorderen Ende des Bolzens zugewandten Seite des Federelements. Es können auch mehrere Unterlegscheiben vorgesehen sein. Für eine besonders kostengünstige Ausführung kann die Unterlegscheibe aber auch entfallen. Insbesondere kann das Federelement unmittelbar am Anbauteil und/oder Widerlager anliegen.

Bei einem sogenannten Bolzenanker kann der Spreizkonus axial fest am Bolzen angeordnet sein. Beim Setzen des Ankers wird der Spreizkonus dann durch eine gemeinsame axiale Bewegung des Bolzens und des Spreizkonus relativ zur Spreizhülse in die Spreizhülse eingezogen. Der Spreizkonus ist dabei vorzugsweise einstückig mit dem Bolzen ausgebildet. Alternativ kann bei einem sogenannten Hülsenanker der Spreizkonus ein vom Bolzen separates Teil sein und vorzugsweise über korrespondierende Gewinde mit dem Bolzen verbunden sein. Das Einziehen des Spreizkonus in die Spreizhülse beim Setzen des Ankers kann dann vorzugsweise zumindest teilweise durch Rotation des Bolzens relativ zum Spreizkonus bewirkt werden, welche von einem Spindeltrieb, der von den korrespondierenden Gewinden gebildet wird, in eine Axialbewegung des Spreizkonus relativ zum Bolzen umgesetzt wird.

Besonders bevorzugt ist es, insbesondere bei einem Bolzenanker, dass der Bolzen im Bereich seines hinteren Endes ein Aussengewinde aufweist, und dass das Widerlager eine Mutter ist, die auf das Aussengewinde aufgeschraubt ist. Die Mutter weist also ein zum Aussengewinde des Bolzens korrespondierendes Innengewinde auf. Durch eine solche Anordnung kann ein Bolzenanker besonders einfach durch Aufbringen eines Drehmoments an der Mutter gesetzt und vorgespannt werden.

Vorzugsweise kann die Erfindung bei Bolzenankern zum Einsatz kommen, bei denen die Spreizhülse nicht bis zum Bohrlochmund reicht. Insbesondere in diesem Fall kann der Bolzen einen Anschlag aufweisen, der eine Verschiebung der Spreizhülse vom Spreizkonus hinweg begrenzt, das heisst eine Verschiebung in Auszugrichtung. Ein solcher Anschlag kann in besonders einfacher Weise gewährleisten, dass die Spreizhülse zuverlässig zusammen mit dem Bolzen in das Bohrloch eindringt. Vorzugsweise ist der Anschlag durch einen Ringbund gebildet, was fertigungstechnisch und im Hinblick auf die Zuverlässigkeit vorteilhaft sein kann. Insbesondere kann der Anschlag axial zwischen dem Spreizkonus und dem Widerlager angeordnet sein.

Erfindungsgemäss wird der maximale Durchmesser $d_{max}$ des Bolzens zwischen dem Spreizkonus und dem Widerlager, also versetzt zum Spreizkonus und versetzt zum Widerlager, bestimmt. Bei dem maximalen Durchmesser $d_{max}$ des Bolzens zwischen dem Spreizkonus und dem Widerlager kann es sich vorzugsweise um ein globales Maximum handeln. Der maximale Durchmesser $d_{max}$ des Bolzens zwischen dem Spreizkonus und dem Widerlager kann insbesondere am Gewinde oder am Ringbund des Bolzens auftreten. Besonders bevorzugt ist es also, dass der maximale Durchmesser $d_{max}$ des Bolzens zwischen dem Spreizkonus und dem Widerlager der Gewindeaussendurchmesser des Gewindes des Bolzens ist. Zweckmässigerweise kann vorgesehen sein, dass die Spreizhülse zumindest einen Spreizschlitz aufweist. Der Spreizschlitz kann zwei benachbarte Spreizsegmente der Spreizhülse trennen. Der Spreizschlitz geht vom vorderen Ende der Spreizhülse aus und kann die Deformation der Spreizhülse erleichtern.

Die Erfindung kommt insbesondere bei solchen Bolzen zum Einsatz, bei denen $d_{max} > 4mm$ ist, da in diesem Fall $F_{min} > 0$ kN ist.

Die Erfindung betrifft auch einen gesetzten Spreizanker, bei dem der Spreizanker im Bohrloch verankert ist, wobei das Federelement das Widerlager des Bolzens gegen das Anbauteil vorspannt. Das Federelement liegt hierbei zumindest mittelbar, vorzugsweise unmittelbar am Anbauteil an. Das Federelement befindet sich geeigneterweise axial zwischen Substrat und Widerlager und/oder zumindest bereichsweise, vorzugsweise vollständig, ausserhalb des Bohrlochs. Der gesetzte Anker ist zweckmässigerweise durch eine Ausnehmung, vorzugsweise ein Loch, im Anbauteil hindurch in das Bohrloch im Substrat eingeführt.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:

Figur 1: eine teilweise längsgeschnittene Ansicht eines in einem Betonsubstrat gesetzten erfindungsgemässen Spreizankers;

Figur 2: ein Kraft-Weg-Diagramm mit einer erfindungsgemässen Federkennlinie für einen Spreizanker gemäss Figur 1 mit $d_{max}$= 12 mm, wobei zusätzlich schematisch der geometrische Zustand des Federelements (komplett entspannt, teilentspannt oder flach) gezeigt ist;

Figur 3: einen Graph, der mit Strichlinien die erfindungsgemässen Relationen für $F_{min}$ und $F_{max}$ und mit durchgehend verbundenen Punkten experimentell ermittelte besonders vorteilhafte Grenzwerte für $F_{min}$ und $F_{max}$ zeigt;

Figur 4: eine teilweise längsgeschnittene Ansicht eines in einem Betonsubstrat gesetzten erfindungsgemässen Spreizankers gemäss einer zweiten Ausführungsform; und

Figur 5: eine teilweise längsgeschnittene Ansicht eines in einem Betonsubstrat gesetzten erfindungsgemässen Spreizankers ähnlich Figur 1, jedoch ohne Unterlegscheibe.

Gleich wirkende Elemente sind in den Figuren mit denselben Bezugszeichen gekennzeichnet.

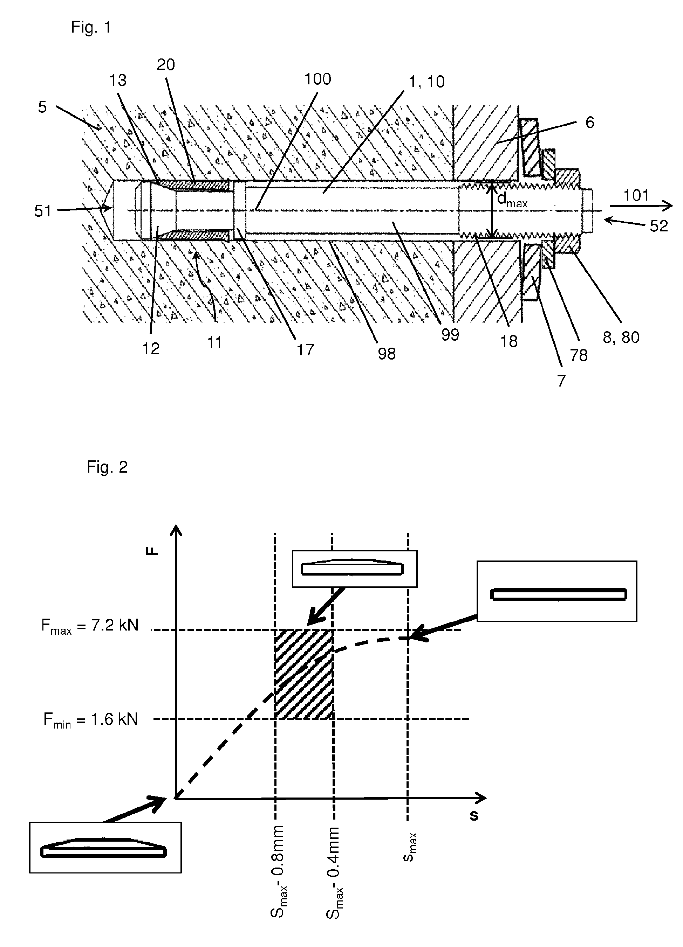

Die Figur 1 zeigt ein Ausführungsbeispiel eines erfindungsgemässen Spreizankers 1. Der gezeigte Spreizanker 1 weist einen Bolzen 10 und eine Spreizhülse 20 auf, wobei die Spreizhülse 20 den Bolzen 10 ringförmig umgibt. Im Bereich seines vorderen Endes 51 weist der Bolzen 10 einen Spreizkonus 12 für die Spreizhülse 20 auf, an den sich rückwärtig ein Halsbereich 11 stetig anschliesst.

Im Halsbereich 11 weist der Bolzen 10 einen im Wesentlichen konstanten zylindrischen Querschnitt auf. Am hieran anschliessenden Spreizkonus 12 ist die Oberfläche des Bolzens 10 als Schrägfläche 13 ausgebildet, und der Durchmesser des Bolzens 10 nimmt dort zum ersten Ende 51 hin zu, das heisst der Bolzen 10 weitet sich am Spreizkonus 12 ausgehend vom Halsbereich 11 zu seinem vorderen ersten Ende 51 hin auf. Die Schrägfläche 13 am Spreizkonus 12 kann konisch im streng mathematischen Sinne sein, muss dies aber häufig nicht.

Auf der dem Spreizkonus 12 abgewandten Seite des Halsbereichs 11 weist der Bolzen 10 einen beispielsweise als Ringbund ausgebildeten Anschlag 17 für die Spreizhülse 20 auf. Im Bereich seines hinteren Endes 52 weist der Bolzen 10 ein Aussengewinde 18 zur Einleitung von Zugkräften in den Bolzen 10 auf. Auf diesem Aussengewinde 18 sitzt eine Mutter 80, die ein axiales Widerlager 8 bildet. Die Mutter 80 ist mit einem Aussenmehrkant, insbesondere einem Aussensechskant, und einem Innengewinde versehen, welches mit dem Aussengewinde 18 des Bolzens 10 korrespondiert.

Der Spreizanker 1 der Figur 1 weist darüber hinaus ein Federelement 7 auf, welches den Bolzen 10 ringartig umgibt, und welches in Figur 1 beispielhaft als einlagige Tellerfeder dargestellt ist. Das als Druckfeder ausgebildete Federelement 7 befindet sich bei gesetztem Anker axial zwischen Substrat 5 und Widerlager 8, insbesondere axial zwischen Anbauteil 6 und Widerlager 8, und kann somit das Widerlager 8 und damit den Bolzen 10 axial gegenüber dem Substrat 5 und dem Anbauteil 6 vorspannen. Das Federelement 7 ist also auf der dem vorderen Ende 51 des Bolzens 10 zugewandten Seite des Widerlagers 8 angeordnet. Zwischen Federelement 7 und Widerlager 8 ist gemäss Figur 1 noch eine Unterlegscheibe 78 vorgesehen.

Beim Setzen des Spreizankers 1 wird der Bolzen 10 mit seinem ersten Ende 51 voran durch eine Ausnehmung im Anbauteil 6 hindurch in Richtung der Längsachse 100 des Bolzens 10 in ein Bohrloch 99 im Substrat 5 aus Figur 1 geschoben. Aufgrund des Anschlags 17, der eine Verschiebung der Spreizhülse 20 vom Spreizkonus 12 hinweg begrenzt, wird dabei auch die Spreizhülse 20 in das Bohrloch 99 eingebracht. Sodann wird der Bolzen 10 durch Anziehen der das Widerlager 8 bildenden Mutter 80 wieder ein Stück weit in der parallel zur Längsachse 100 verlaufenden Auszugrichtung 101 aus dem Bohrloch 99 herausgezogen. Aufgrund ihrer Reibung an der im Wesentlichen zylindrischen Wand 98 des Bohrlochs 99 bleibt die Spreizhülse 20 dabei im Bohrloch 99 zurück und es kommt infolgedessen zu einer Verschiebung des Bolzens 10 relativ zur Spreizhülse 20. Bei dieser Verschiebung dringt die Schrägfläche 13 des Spreizkonus 12 des Bolzens 10 immer tiefer so in die Spreizhülse 20 ein, dass die Spreizhülse 20 im Bereich ihres vorderen Endes von der Schrägfläche 13 radial aufgeweitet und mit der Wand 98 des Bohrlochs 99 verpresst wird. Durch diesen Mechanismus wird der Spreizanker 1 im Substrat 5 fixiert. Die Mutter 80 wird vorzugsweise so lange weiter angezogen, bis das Federelement 7 vollständig eingefedert ist, also seinen maximalen Federweg $s_{max}$ erreicht hat. Damit geht eine axiale Sollvorspannung im Bolzen 10 einher.

Öffnet sich nach dem Setzen in einem Substrat 5 aus gerissenem Beton ein Riss in der Umgebung des Spreizankers 1, so kann sich der Spreizkonus 12 und damit der Bolzen 10 unter Umständen ein Stück weit in Auszugrichtung 101 relativ zum Substrat 5 mit der Spreizhülse 20 bewegen. Das Federelement 7 kann in diesem Fall dafür sorgen dass die Vorspannung im Bolzen 10 zu einem hinreichenden Teil aufrechterhalten wird.

Ein Beispiel für eine erfindungsgemässe Federkennlinie des Federelements 7 ist in Figur 2 gezeigt. Wie Figur 2 zeigt, kann die Erfindung einen in Figur 2 für das Beispiel $d_{max}$ = 12 mm schraffiert gezeigten Bereich vorgeben, in welchem die Federkennlinie liegen muss, wenn das Federelement axial 0.4 - 0.8 mm von seinem maximalen Federweg $s_{max}$ hinweg entspannt ist, was einem Weg entspricht, der bei Rissöffnung in gerissenem Beton typischerweise auftritt. Liegt die Federkennlinie im besagten schraffierten Bereich, so kann sie einerseits bei einer typischen Rissöffnung in gerissenem Beton noch eine hinreichend grosse Restvorspannung zur Verfügung stellen, um ein unerwünschtes Lösen der Verankerung und damit eine unerwünschte Axialbewegung des Bolzens 10 in Auszugrichtung 101 zu verhindern. Andererseits kann das Federelement 7 noch als Einzelfeder konzipiert werden, so dass der Materialaufwand gering ist.

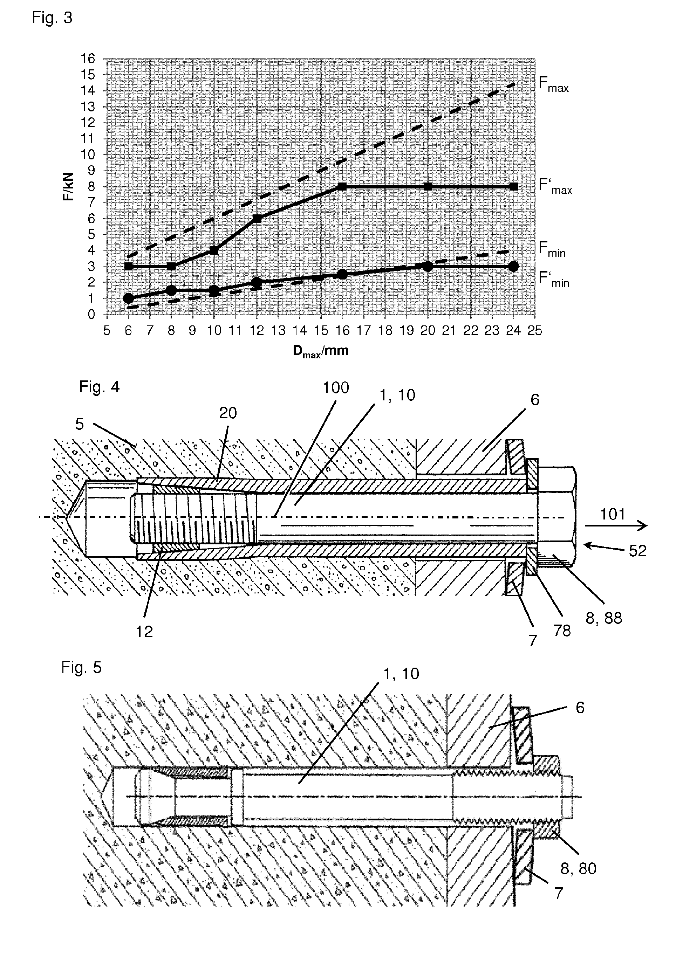

Figur 3 zeigt ein Diagramm mit möglichen Grenzwerten $F_{min}$ und $F_{max}$ für die Restfederkraft F bei Entspannung 0.4 mm bis 0.8 mm aus dem maximalen Federweg heraus für verschiedene $d_{max}$. Mit Strichlinien sind dabei die erfindungsgemässen Zusammenhänge

$$F_{min} = d_{max} \cdot 0.2 \text{ kN/mm} - 0.8 \text{ kN (untere Strichlinie in Figur 3)}$$

und

$$F_{max} = d_{max} \cdot 0.6 \text{ kN/mm (obere Strichlinie in Figur 3)}$$

gezeigt. Mit Punkten, welche durch durchgehende Linien verbunden sind, sind Werte für $F'_{min}$ (kreisförmige Punkte, unten) und $F'_{max}$ (quadratische Punkte, oben) angegeben, die sich in Experimenten als besonders brauchbar herausgestellt haben. Wie Figur 3 zeigt, sind die oben genannten Zusammenhänge für $F_{min}$ und $F_{max}$ lineare Annäherungen an diese experimentellen Punkte. Anstelle der Zusammenhänge können auch die in Figur 3 gezeigten Punkte und deren lineare Verbindungslinien $F_{min}$ und $F_{max}$ definieren. Wie in Figur 1 gezeigt ist, kann der maximale Bolzendurchmesser $d_{max}$ zwischen Spreizkonus 12 und Widerlager 8, der in Figur 3 die Abszisse bildet, insbesondere der Gewindeaussendurchmesser des Aussengewindes 18 des Bolzens 10 sein.

Beim Ausführungsbeispiel der Figur 1 ist der Spreizanker 1 als sogenannter Bolzenanker ausgeführt. Ein weiteres Ausführungsbeispiel, bei dem der Spreizanker 1 als sogenannter Hülsenanker ausgebildet ist, ist in Figur 4 gezeigt. Im Gegensatz zum Bolzenanker aus Figur 1, bei dem der Spreizkonus 12 axial fest am Bolzen 10 vorgesehen ist und insbesondere einstückig mit dem Bolzen 10 ausgebildet ist, ist der Spreizkonus 12 beim Hülsenanker der Figur 4 ein vom Bolzen 10 separates Teil. Er weist ein Innengewinde auf, welches mit einem Aussengewinde am Bolzen 10 korrespondiert. Darüber hinaus reicht beim Hülsenanker der Figur 4 die Spreizhülse 20, die auch mehrteilig sein kann, bis zum Bohrlochmund, und das Widerlager 8 am rückwärtigen Ende des Bolzens 10 ist als Schraubenkopf 88 ausgebildet, drehfest und axial fest am Bolzen 10 angeordnet und insbesondere einstückig mit dem Bolzen 10 ausgebildet.

Zum Setzen des Ankers der Figur 4 wird der Bolzen 10 über den Schraubenkopf 88 um die Längsachse 100 in Drehung versetzt. Die korrespondierenden Gewinde wandeln diese Drehbewegung des Bolzens 10 in eine Axialbewegung des Spreizkonus 12 relativ zum Bolzen 10 und damit relativ zur Spreizhülse 20 um, was zum Einziehen des Spreizkonus 12 in die Spreizhülse 20 führt.

Auch beim Ausführungsbeispiel der Figur 4 ist ein Federelement 7 vorgesehen, welches das Widerlager 8 und damit den Bolzen 10 gegenüber dem Substrat 5 und/oder dem Anbauteil 6 vorspannen kann. Die Kennlinie des Federelements 7 des Ankers aus Figur 4 ist geeigneterweise ebenfalls wie im Zusammenhang mit den Figuren 2 und 3 erläutert ausgeführt.

In den Ausführungsbeispielen der Figuren 1 und 4 ist zwischen Federelement 7 und Widerlager 8 jeweils eine Unterlegscheibe 78 vorgesehen. Diese Unterlegscheibe 78 kann aber auch entfallen. Ein Ausführungsbeispiel ohne Unterlegescheibe ist in Figur 5 gezeigt. Dieses Ausführungsbeispiel entspricht, bis auf das Fehlen der Unterlegscheibe, dem der Figur 1.

Da beim Ausführungsbeispiel der Figur 5 die Unterlegscheibe fehlt, liegt dort das Federelement 7 unmittelbar am Widerlager 8 an. Die Kennlinie des Federelements 7 des Ankers aus Figur 5 ist geeigneterweise ebenfalls wie im Zusammenhang mit den Figuren 2 und 3 erläutert ausgeführt. Der Setzvorgang des Ankers aus Figur 5 kann wie im Zusammenhang mit Figur 1 erläutert erfolgen.

Auch beim Ausführungsbeispiel der Figur 4 kann die Unterlegscheibe 78 gegebenenfalls entfallen, so dass auch dort das Federelement 7 unmittelbar am Widerlager 8 anliegen kann.

**Patentansprüche**

1. Spreizanker (1) zum Verankern in einem Bohrloch (99) in einem Substrat (5), mit

   - einem Bolzen (10) mit einem vorderen Ende (51) und einem dem vorderen Ende entgegengesetzten hinteren Ende (52),
   - einer am Bolzen (10) angeordneten Spreizhülse (20),
   - einem Spreizkonus (12), welcher im Bereich des vorderen Endes (51) des Bolzens angeordnet ist, und welcher die Spreizhülse (20) radial nach aussen drängt, wenn der Spreizkonus (12) in einer Auszugrichtung (101) relativ zur Spreizhülse (20) versetzt wird,
   - einem Widerlager zum axialen Anpressen eines Anbauteils (6) an das Substrat (5), welches im Bereich des hinteren Endes (52) des Bolzens (10) am Bolzen (10) angeordnet ist, und
   - einem am Bolzen (10) angeordneten Federelement (7) zum axialen Vorspannen des Widerlagers (8) gegen das Anbauteil (6),
   **dadurch gekennzeichnet,**
   **dass** die axiale Federkraft F des Federelements (7) im Bereich $F_{min} < F < F_{max}$ mit

   $$F_{min} = d_{max} \cdot 0.2 \text{ kN/mm} - 0.8 \text{ kN}$$

   und

   $$F_{max} = d_{max} \cdot 0.6 \text{ kN/mm}$$

   liegt, wenn das Federelement (7) axial 0.4 mm bis 0.8 mm aus seinem maximalen Federweg heraus entspannt ist, wobei $d_{max}$ ein maximaler Durchmesser des Bolzens (10) zwischen dem Spreizkonus (12) und dem Widerlager (8) ist.

2. Spreizanker (1) nach Anspruch 1,
   **dadurch gekennzeichnet,**
   **dass** das Federelement (7) eine einlagige Tellerfeder ist.

3. Spreizanker (1) nach einem der vorstehenden Ansprüche,
   **dadurch gekennzeichnet,**
   **dass** er eine Unterlegscheibe (78) aufweist, die den Bolzen (10) umgibt, und die zwischen dem Federelement (7) und dem Widerlager (8) angeordnet ist.

4. Spreizanker (1) nach einem der vorstehenden Ansprüche,
   **dadurch gekennzeichnet,**
   **dass** der Bolzen (10) im Bereich seines hinteren Endes (52) ein Aussengewinde (18) aufweist, und dass das Widerlager (8) eine Mutter (80) ist, die auf das Aussengewinde (18) aufgeschraubt ist.

5. Spreizanker (1) nach Anspruch 4,
   **dadurch gekennzeichnet,**
   **dass** der maximale Durchmesser $d_{max}$ des Bolzens (10) zwischen dem Spreizkonus (12) und dem Widerlager (8) der Gewindeaussendurchmesser des Aussengewindes (18) des Bolzens (10) ist.

6. Spreizanker (1) nach einem der vorstehenden Ansprüche,
   **dadurch gekennzeichnet,**
   **dass** er im Bohrloch (99) verankert ist, wobei
   das Federelement (7) das Widerlager (8) des Bolzens (10) gegen das Anbauteil (6) vorspannt.

Fig. 1

Fig. 2

$F_{max}$ = 7.2 kN

$F_{min}$ = 1.6 kN

$S_{max}$- 0.8mm

$S_{max}$- 0.4mm

$S_{max}$

F

s

Fig. 3

Fig. 4

Fig. 5

Europäisches
Patentamt

European
Patent Office

Office européen
des brevets

## EUROPÄISCHER RECHERCHENBERICHT

Nummer der Anmeldung

EP 13 18 9656

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 30 22 011 A1 (LIEBIG HEINRICH) 17. Dezember 1981 (1981-12-17) * Seite 15, letzter Absatz - Seite 16, Absatz 2; Abbildungen * ----- | 1-6 | INV. F16B13/06 ADD. F16B43/00 |
| X | DE 202 17 548 U1 (LIN YEN TSENG [TW]) 13. März 2003 (2003-03-13) * Absatz [0014]; Abbildung 5 * ----- | 1 | |
| X | DE 21 64 666 A1 (PALAR NV) 3. August 1972 (1972-08-03) * Abbildung 6 * ----- | 1 | |
| X | US 3 329 058 A (DEANS CUMMING JAMES) 4. Juli 1967 (1967-07-04) * Spalte 2, Zeilen 64-69 * ----- | 1 | |
| X | DE 31 10 537 A1 (BRUECKL TECHNIK [DE]) 28. Oktober 1982 (1982-10-28) * Seite 4, Absatz 5; Abbildung * ----- | 1 | |
| X | DE 101 06 844 A1 (FISCHER ARTUR WERKE GMBH [DE]) 5. September 2002 (2002-09-05) * Abbildungen * ----- | 1 | RECHERCHIERTE SACHGEBIETE (IPC) F16B |
| X | DE 26 56 832 A1 (HILTI AG) 22. Juni 1978 (1978-06-22) * Seite 24, Absatz 2; Abbildung 5 * ----- | 1 | |
| X,D | DE 33 31 097 A1 (HILTI AG [LI]) 14. März 1985 (1985-03-14) * Zusammenfassung; Abbildungen * ----- -/-- | 1 | |

Der vorliegende Recherchenbericht wurde für alle Patentansprüche erstellt

| Recherchenort | Abschlußdatum der Recherche | Prüfer |
|---|---|---|
| München | 21. Februar 2014 | Pöll, Andreas |

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 13 18 9656

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| T | Schnorr: "Die original SCHNORR Tellerfedern", , XP002720679, Gefunden im Internet: URL:http://www.schnorr.de/fileadmin/downloads/de/schnorr_pb_de_s10-19.pdf [gefunden am 2014-02-20] ----- | 1 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| München | 21. Februar 2014 | Pöll, Andreas |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 13 18 9656

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-02-2014

| Im Recherchenbericht angeführtes Patentdokument | | Datum der Veröffentlichung | Mitglied(er) der Patentfamilie | | Datum der Veröffentlichung |
|---|---|---|---|---|---|
| DE 3022011 | A1 | 17-12-1981 | KEINE | | |
| DE 20217548 | U1 | 13-03-2003 | DE | 20217548 U1 | 13-03-2003 |
| | | | TW | M267361 U | 11-06-2005 |
| DE 2164666 | A1 | 03-08-1972 | CA | 967036 A1 | 06-05-1975 |
| | | | DE | 2164666 A1 | 03-08-1972 |
| | | | FR | 2131306 A5 | 10-11-1972 |
| | | | GB | 1354958 A | 05-06-1974 |
| US 3329058 | A | 04-07-1967 | GB | 1044242 A | 28-09-1966 |
| | | | US | 3329058 A | 04-07-1967 |
| DE 3110537 | A1 | 28-10-1982 | KEINE | | |
| DE 10106844 | A1 | 05-09-2002 | KEINE | | |
| DE 2656832 | A1 | 22-06-1978 | KEINE | | |
| DE 3331097 | A1 | 14-03-1985 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 3331097 A1
- DE 3022011 A1